# EUROPEAN PATENT SPECIFICATION

(11) **EP 1 881 549 B1**
(45) Date of publication and mention of the grant of the patent: **13.04.2016**
(21) Application number: 07250814.6
(22) Date of filing: 27.02.2007
(51) Int. Cl.: H01M 8/02, H01M 4/60

(54) **Electrode for fuel cell and fuel cell employing the electrode**
Elektrode für Brennstoffzelle und Brennstoffzelle mit der Elektrode
Électrode pour pile à combustible et pile à combustible utilisant l'électrode

(30) Priority: 21.07.2006 KR 20060068411
(43) Date of publication of application: 23.01.2008
(73) Proprietor: Samsung SDI Co., Ltd., Suwon-si, Gyeonggi-do 442-390 (KR)
(72) Inventor: Sun, Hee-young, Yongin-si, Gyeonggi-do (KR); Kim, Tae-young, Yongin-si, Gyeonggi-do (KR); Cho, Seong-woo, Yongin-si, Gyeonggi-do (KR)
(74) Representative: Zijlstra, Robert Wiebo Johan

(56) References cited:
- EP-A- 1 247 844
- EP-A- 1 760 110
- EP-A1- 1 253 661
- WO-A-2005/000955
- US-A- 5 525 436
- US-A1- 2005 142 413
- US-A1- 2007 020 507
- SCHUSTER,F.H. ET AL.: "Anhydrous Proton-conducting Polymers" ANNU.REV.MATER.RES., vol. 33, 9 April 2003 (2003-04-09), pages 233-261, XP002454581
- YAMADA M ET AL: "Anhydrous proton conducting polymer electrolytes based on poly(vinylphosphonic acid)-heterocycle composite material" POLYMER, ELSEVIER SCIENCE PUBLISHERS B.V, GB, vol. 46, no. 9, 15 April 2005 (2005-04-15), pages 2986-2992, XP004810416 ISSN: 0032-3861
- PU,H ET AL.: "Proton Transport in Polybenzimidazole Blended with H3PO4 or H2SO4" J.POLYMER SCIENCE, PART B: POLYMER PHYSICS, vol. 40, 2002, pages 663-669, XP002454376

## Description

The present invention relates to an electrode for a fuel cell and a fuel cell employing the same, and more particularly, to an electrode for a fuel cell in which materials having an affinity for phosphoric acid are evenly dispersed within the electrode to ensure that phosphoric acids preferentially penetrate into micropores and thus prevent cell performance deterioration due to the presence of excessive phosphoric acid in the electrode, and a fuel cell whose efficiency is improved by employing the electrode.

Fuel cells using a polymer electrolyte membrane as an electrolyte are expected to be used as a power supply for electric cars or a distributed power generation system for domestic use since the operating temperature thereof is relatively low and miniaturization is possible. Polymer electrolyte membranes used in polymer electrolyte membrane fuel cells are perfluorocarbonsulfonate polymer membrane which are represented by Nafion.

However, this type of polymer electrolyte membrane needs moisture to demonstrate proton conduction, so humidification is needed. Further, hot operation at a temperature of 100°C or higher is required to increase cell system efficiency, however such a high temperature evaporates and dries up moisture in an electrolyte membrane thereby resulting in dysfunction as a solid electrolyte.

To solve such problems originating from the conventional techniques, an unhumidified electrolyte membrane which can operate at high temperatures in excess of 100°C is developed. For example, Japanese Patent Laid-open No. hei11-503262 discloses materials for composing unhumidified electrolyte membranes, including polybenzimidazole doped with phosphoric acid.

Also, in low-temperature operating cells using perfluorocarbon sulfonic polymer membranes, an anhydrous electrode made by mixing polytetrafluoroethylene (PTFE), which is a water repellant, is largely used to prevent poor gas diffusion due to water or produced water formed during power generation at electrodes, in particular a cathode. (An example is Japanese Patent Laid-open No. hei05-283082).

Also, in phosphoric acid-type fuel cells which are operated at temperatures of 150 to 200 °C, liquid phosphoric acid is used as an electrolyte, but this liquid phosphoric acid exists within electrodes in large amounts and inhibits gas diffusion. Thus, polytetrafluoroethylene (PTFE) is mixed within an electrode catalyst, and an electrode catalyst layer is used to prevent micropores in the electrodes from being blocked with phosphoric acid.

Also, regarding fuel cells using polybenzimidazole (PBI) containing phosphoric acid, which is a high-temperature unhumidified electrolyte, in electrolyte membranes, impregnation of liquid phosphoric acid into electrodes has been tried to improve interfacial contact between electrodes and membranes, and there have been efforts to increase loading content of metal catalysts, but satisfactory properties could not be acquired.

European patent application EP 1 253 661 A1 discloses a fuel cell separator comprising a resin and an electric conductor dispersed in the resin. The resin preferably is a phenolic resin containing a functionalized dihydrobenzoxazine ring.

US patent application US 2005/0142413 A1 discloses a fuel cell separator comprising a thermosetting resin containing a compound with a dihydrobenzoxazine ring, a compound reactive with a phenolic hydroxyl group formed by opening of a dihydrobenzoxazine ring, a latent curing material and an electroconductive material.

European patent application EP 1 536 500 A1 discloses an electrode for a fuel cell comprising a porous electro-conductive material carrying a catalyst and, arranged on the surface, including pores, thereof or in its vicinity, a proton-conductive substance characterized in that the proton-conductive substance is one obtained by carrying out coupling or polymerization of a proton-conductive substance precursor, a proton-conductive monomer or an equivalent thereof on the surface or in the vicinity.

The present invention provides an electrode for fuel cells which can improve properties of fuel cells by being able to increase the three-phase interfacial area of gas (fuel gas or oxidized gas)-liquid (phosphoric acid)-solid (catalyst) on the surface of the catalyst, and methods of manufacturing a fuel cell employing the electrode. According to an aspect of the present invention, there is provided an electrode for fuel cells including a catalyst layer containing a benzoxazine monomer represented by Formula 1 below, a catalyst, and a binder: 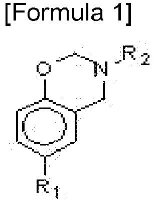 where R₁ is a hydrogen atom, a substituted or unsubstituted C₁-C₂₀ alkyl group, a substituted or unsubstituted C₂-C₂₀ alkenyl group, a substituted or unsubstituted C₂-C₂₀ alkynyl group, a substituted or unsubstituted C₆-C₂₀ aryl group, a substituted or unsubstituted C₂-C₂₀ heteroaryl group, a substituted or unsubstituted C₄-C₂₀ cycloalkyl group, a substituted or unsubstituted C₂-C₂₀ heterocyclic group, a halogen atom, a hydroxy group, or a cyano group; and R₂ is a substituted or unsubstituted C₁-C₂₀ alkyl group, a substituted or unsubstituted C₁-C₂₀ alkenyl group, a substituted or unsubstituted C₁-C₂₀ alkynyl group, a substituted or unsubstituted C₆-C₂₀ aryl group, a substituted or unsubstituted C₆-C₂₀ aryl group, a substituted or unsubstituted C₇-C₂₀ arylalkyl group, a substituted or unsubstituted C₂-C₂₀ heteroaryl group, a substituted or unsubstituted C₂-C₂₀ heteroarylalkyl group, a substituted or unsubstituted C₄-C₂₀ carbocyclic group, a substituted or unsubstituted C₄-C₂₀ carbocyclic alkyl group, a substituted or unsubstituted C₂-C₂₀ heterocyclic group, or a substituted or unsubstituted C₂-C₂₀ heterocyclic alkyl group.

According to another aspect of the present invention, there is provided a method of manufacturing an electrode for fuel cells, including: obtaining a dispersed solution by dispersing a catalyst in a solvent; adding, mixing and stirring a mixture containing a benzoxazine monomer represented by Formula 1, a binder, and a solvent with the dispersed solution; and coating the mixture on the surface of a carbon support: 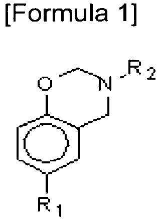
where R₁ is a hydrogen atom, a substituted or unsubstituted C₁-C₂₀ alkyl group, a substituted or unsubstituted C₂-C₂₀ alkenyl group, a substituted or unsubstituted C₂-C₂₀ alkynyl group, a substituted or unsubstituted C₆-C₂₀ aryl group, a substituted or unsubstituted C₂-C₂₀ heteroaryl group, a substituted or unsubstituted C₄-C₂₀ cycloalkyl group, a substituted or unsubstituted C₂-C₂₀ heterocyclic group, a halogen atom, a hydroxy group, or a cyano group; and
R₂ is a substituted or unsubstituted C₁-C₂₀ alkyl group, a substituted or unsubstituted C₂-C₂₀ alkenyl group, a substituted or unsubstituted C₂-C₂₀ alkynyl group, a substituted or unsubstituted C₆-C₂₀ aryl group, a substituted or unsubstituted C₆-C₂₀ aryl group, a substituted or unsubstituted C₇-C₂₀ arylalkyl group, a substituted or unsubstituted C₂-C₂₀ heteroaryl group, a substituted or unsubstituted C₂-C₂₀ heteroarylalkyl group, a substituted or unsubstituted C₄-C₂₀ carbocyclic group, a substituted or unsubstituted C₄-C₂₀ carbocyclic alkyl group, a substituted or unsubstituted C₂-C₂₀ heterocyclic group, or a substituted or unsubstituted C₂-C₂₀ heterocyclic alkyl group.

According to another aspect of the present invention, there is provided a fuel cell employing the electrode.

The above and other features and advantages of the present invention will become more apparent by describing in detail exemplary embodiments thereof with reference to the attached drawings in which:
FIGS. 1 through 4 show cell potential changes with respect to current density for fuel cells manufactured according to Examples 1 to 3, and Comparative Example 1;
FIG. 5 shows the results of measuring at 1 kHz the cell resistance of MEA manufactured according to Example 2 and Comparative Examples 1-3, with respect to temperature, during repeated cooling-heating of the cells after the cell capacity reaches a maximum point; and
FIG. 6 is graph showing the results of Tafel fitting measurement according to Measurement 2 in the present invention.

The electrode for fuel cells according to an embodiment of the present invention contains an even distribution of a hydrophilic or phosphoric acidophilic benzoxazine monomer represented by Formula 1 below, which is soluble to phosphoric acid but does not poison a catalyst, thereby improving the wetting capability of phosphoric acid (H₃PO₄) within the electrode and allowing phosphoric acids to permeate preferentially into micropores of the electrode. As a result, a problem which occurs when phosphoric acids mainly permeate into macropores of the electrode, that is, flooding in which liquid phosphoric acids exist in a large amount within the electrode and inhibit gas diffusion, is efficiently prevented, and thus the three-phase interfacial area of gas phase (fuel gas or oxidized gas)-liquid phase (phosphoric acid)-solid phase (catalyst) is increased. 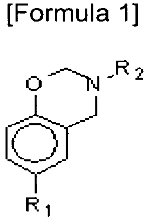
where R₁ is a hydrogen atom, a substituted or unsubstituted C₁-C₂₀ alkyl group, a substituted or unsubstituted C₂-C₂₀ alkenyl group, a substituted or unsubstituted C₂-C₂₀ alkynyl group, a substituted or unsubstituted C₆-C₂₀ aryl group, a substituted or unsubstituted C₂-C₂₀ heteroaryl group, a substituted or unsubstituted C₄-C₂₀ cycloalkyl group or a substituted or unsubstituted C₂-C₂₀ a heterocyclic group, a halogen atom, a hydroxy group, or a cyano group, and
R₂ is a substituted or unsubstituted C₁-C₂₀ alkyl group, a substituted or unsubstituted C₂-C₂₀ alkenyl group, a substituted or unsubstituted C₂-C₂₀ alkynyl group, a substituted or unsubstituted C₆-C₂₀ aryl group, a substituted or unsubstituted C₆-C₂₀ aryl group, a substituted or unsubstituted C₇-C₂₀ arylalkyl group, a substituted or unsubstituted C₂-C₂₀ heteroaryl group, a substituted or unsubstituted C₂-C₂₀ heteroarylalkyl group, a substituted or unsubstituted C₄-C₂₀ carbocyclic group, a substituted or unsubstituted C₄-C₂₀ carbocyclic alkyl group, a substituted or unsubstituted C₂-C₂₀ a heterocyclic group, or a substituted or unsubstituted C₂-C₂₀ heterocyclic alkyl group.
In Formula 1, R₁ may be a C₁-C₁₀ alkyl group, an allyl group, a C₆-C₂₀ aryl group, a tertbutyl group, a C₂-C₁₀ alkenyl group, or a C₂-C₁₀ alkynyl group, and R₂ may be aniline, a 1-(3-aminoa propyl)imidazolyl group, a 2-aminobenzimidazolyl group, or an allyl amine-derivative group, that is, a group represented by the Formula below:

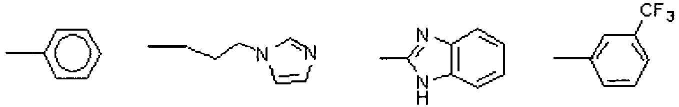

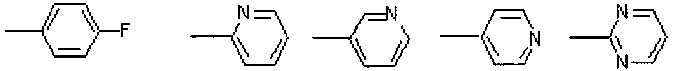

Examples of a benzoxazine monomer represented by Formula 1 include the compounds represented by Formulae 2 through 11:

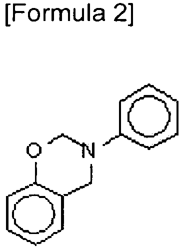

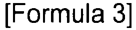

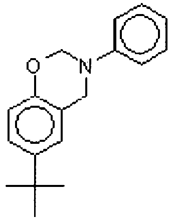

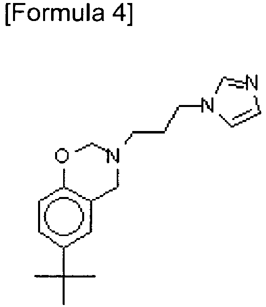

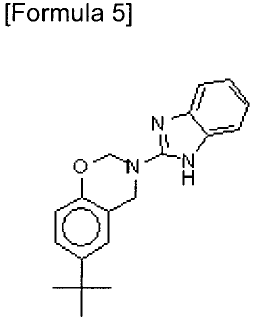

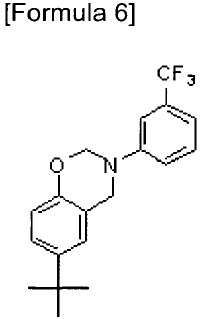

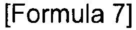

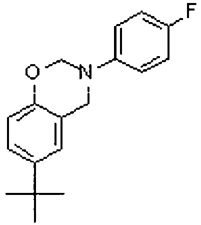

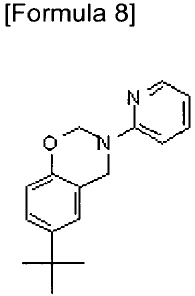

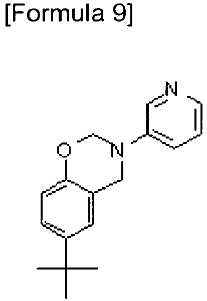

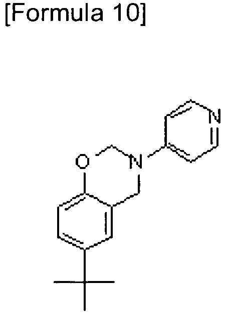

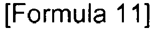

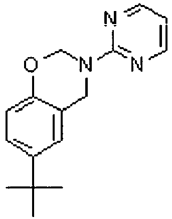

The electrode according to an embodiment of the present invention contains a catalyst and a binder in addition to the benzoxazine monomer of Formula 1. The benzoxazine monomer of Formula 1 is a material for improving phosphoric acid wettability, and the content thereof may be 0.001 to 0.5 parts by weight based on 1 part by weight of the catalyst. A content of the benzoxazine monomer of Formula 1 lower than 0.001 parts by weight is insufficient for improving a wetting state of the electrode, while a content higher than 0.5 parts by weight undesirably accelerates flooding.

For the catalyst, platinum (Pt) is independently used, or an alloy or mixture of Pt with at least one metal selected from the group consisting of gold, palladium, rhodium, iridium, ruthenium, tin, molybdenum, cobalt, and chromium is used. For the binder, at least one selected from the group consisting of poly(vinylidenefluoride), polytetrafluoroethylene, tetrafluoroethylene-hexafluoroethylene copolymer, and perfluoroethylene is used, and the content of the binder may be 0.001 to 0.5 parts by weight based on 1 part by weight of the catalyst. A content of the binder is lower than 0.001 parts by weight, it is insufficient to connect catalyst particles, and thus the catalyst particles are separated. As a result, the catalyst layer is detached from the carbon paper. A content of the binder is higher than 0.5 parts by weight, resistance of the electrode is increased, and thus the cell performance is deteriorated.

A method of manufacturing the electrode for fuel cells is described below.

First, a dispersed solution is obtained by dispersing a catalyst in a solvent. N-methyl-pyrrolidone (NMP), dimethylacetamide (DMAc) or the like is used as the solvent, and the content of the solvent is 1 to 10 parts by weight based on 1 part by weight of the catalyst.

A mixture containing a benzoxazine monomer represented by Formula 1, a binder, and the solvent is added to the dispersed solution and mixed, and the resulting mixture is stirred. The content of the benzoxazine monomer is 0.001 to 0.5 parts by weight based on 1 part by weight of the catalyst. The content of the binder is 0.001 to 0.1 parts by weight based on 1 part by weight of the catalyst.

The electrode is completed by coating the above resulting mixture on the surface of a carbon support material. The carbon support material is fixed on a glass substrate for convenience of coating. Coating methods are not limited to particular methods, but methods such as coating using a doctor blade, Bar coating, screen printing or the like can be used.

After coating the mixture, drying is performed to remove the solvent, and is carried out at temperatures in the range of 20 to 150 °C. The drying time depends on the drying temperature, and is carried out for 10 to 60 minutes. The drying may be carried out for 1 hour at room temperature; for at least 15 minutes at 60°C; for at least 10 minutes at 80°C; or for at least 10 minutes at 120 °C.

Methods of manufacturing a fuel cell using the electrode for fuel cells according to an embodiment of the present invention are described below.

For electrolyte membranes in an embodiment of the present invention, any electrolyte membranes commonly used in fuel cells can be used. Examples include a polybenzimidazole electrolyte membrane, a polybenzoxazine-polybenzimidazole copolymer electrolyte membrane, a polytetrafluoroethylene microporous membrane, etc.

According to an embodiment of the present invention, an electrolyte membrane containing a cross-linking body of polybenzoxazine compounds, which is prepared by polymerization one selected from a first benzoxazine monomer represented by Formula 1 below and a second benzoxazine monomer represented by Formula 3 below with cross-linkable compounds. 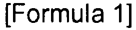 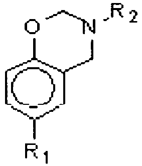
where R₁ is a hydrogen atom, a substituted or unsubstituted C₁-C₂₀ alkyl group, a substituted or unsubstituted C₂-C₂₀ alkenyl group, a substituted or unsubstituted C₂-C₂₀ alkynyl group, a substituted or unsubstituted C₆-C₂₀ aryl group, a substituted or unsubstituted C₂-C₂₀ heteroaryl group, a substituted or unsubstituted C₄-C₂₀ cycloalkyl group, a substituted or unsubstituted C₂-C₂₀ a heterocyclic group, a halogen atom, a hydroxy group, or a cyano group; and
R₂ is a substituted or unsubstituted C₁-C₂₀ alkyl group, a substituted or unsubstituted C₂-C₂₀ alkenyl group, a substituted or unsubstituted C₂-C₂₀ alkynyl group, a substituted or unsubstituted C₆-C₂₀ aryl group, a substituted or unsubstituted C₆-C₂₀ aryl group, a substituted or unsubstituted C₇-C₂₀ arylalkyl group, a substituted or unsubstituted C₂-C₂₀ heteroaryl group, a substituted or unsubstituted C₂-C₂₀ heteroarylalkyl group, a substituted or unsubstituted C₄-C₂₀ carbocyclic group, a substituted or unsubstitut ed C₄-C₂₀ carbocyclic alkyl group, a substituted or unsubstituted C₂-C₂₀ a heterocyclic group, or a substituted or unsubstituted C₂-C₂₀ heterocyclic alkyl group,

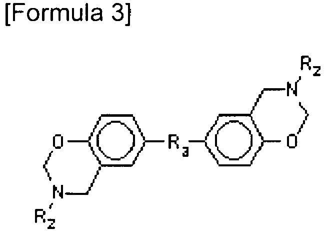

where R₂ is a substituted or unsubstituted C₁-C₂₀ alkyl group, a substituted or unsubstituted C₂-C₂₀ alkenyl group, a substituted or unsubstituted C₂-C₂₀ alkynyl group, a substituted or unsubstituted C₆-C₂₀ aryl group, a substituted or unsubstituted C₆-C₂₀ aryl group, a substituted or unsubstituted C₇-C₂₀ arylalkyl group, a substituted or unsubstituted C₂-C₂₀ heteroaryl group, a substituted or unsubstituted C₂-C₂₀ heteroarylalkyl group, a substituted or unsubstituted C₄-C₂₀ carbocyclic group, a substituted or unsubstituted C₄-C₂₀ carbocyclic alkyl group, a substituted or unsubstituted C₂-C₂₀ a heterocyclic group, or a substituted or unsubstituted C₂-C₂₀ heterocyclic alkyl group; and
R₃ is selected from the group consisting of a substituted or unsubstituted C₁-C₂₀ alkylene group, a substituted or unsubstituted C₂-C₂₀ alkenylene group, a substituted or unsubstituted C₂-C₂₀ alkynylene group, a substituted or unsubstituted C₆-C₂₀ arylene group, a substituted or unsubstituted C₂-C₂₀ heteroarylene group, and -C(=O)-, -SO₂-.

Examples of the benzoxazine monomer represented by Formula 1 are compounds represented by Formulae 2 through 11, and examples of the second benzoxazine monomer represent by Formula 3 are compounds represented by Formulae 13 through 17. 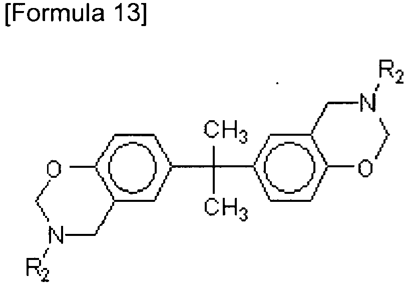 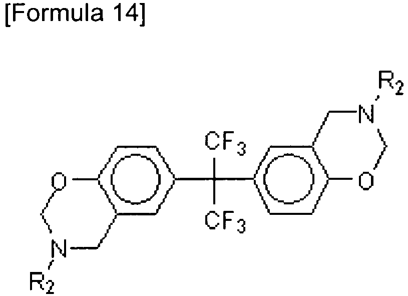 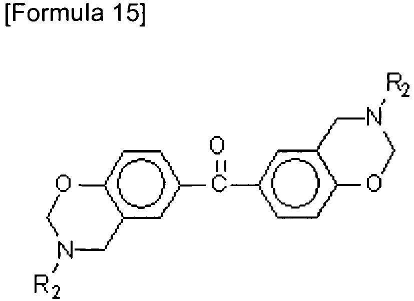 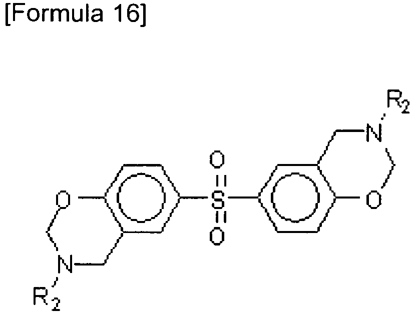 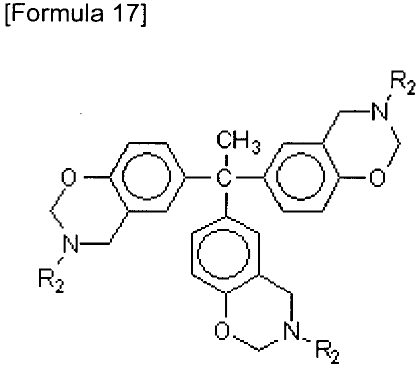
where R₁ is -C(CH₃)₂-, -C(CF₃)₂-, -C(=O)-, -SO₂-, -CH₂-, -C(CCl₃)-, -CH(CH₃)-, -CH(CF₃)- or 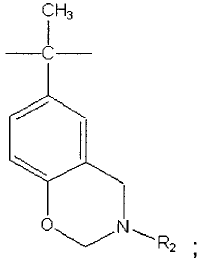
R₂ is a phenyl group, -CH₂-CH=CH₂, or a group represented by the following Formula.

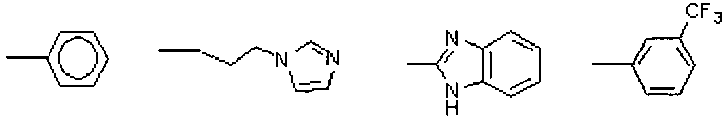

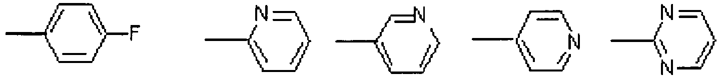

Examples of the cross-linkable compounds include at least one selected from polybenzimidazole (PBI), polybenzthiazole, polybenzoxazole, and polyimids, but are not limited thereto.

The cross-linkable compound is mixed with one selected from the first benzoxazine monomer represented by Formula 1 and the second benzoxazine monomer represented by Formula 3 in a predetermined mixing ratio. The content of the cross-linkable compound may be 5 to 95 parts by weight based on 100 parts by weight of one selected from the first benzoxazine monomer represented by Formula 1 and the second benzoxazine monomer represented by Formula 3.

When the content of the cross-linkable compound is lower than 5 parts by weight, proton conductivity drops due to a lack of phosphoric acid impregnation. On the other hand, when the content of cross-linkable compound is higher than 95 parts by weight, the cross-linking body dissolves in polyphosphoric acid under excessive phosphoric acid, which causes undesirably gas permeation.

Methods of forming electrolyte membranes are described with examples using polybenzimidazole as the cross-linkable compound.

According to a first method, a monomer selected from a first benzoxazine monomer represented by Formula 1 and a second benzoxazine monomer represented by Formula 3 was blended with a cross-linkable compound such as PBI, and a setting reaction was carried out at temperatures in the range of 50 to 250°C, preferably 80 to 220°C. Then, a proton conductor such as an acid was impregnated to form an electrolyte membrane.

According to a second method, an electroyte membrane is formed using a mixture of one selected from a first benzoxazine monomer represented by Formula 1 and a second benzoxazine monomer represented by Formula 3 with a cross-linkable compound such as PBI.

As a method of forming the electrolyte membrane, a tape casting method can be used, and common coating methods can also be used. Examples of the coating methods include casting the mixture on a support material using a doctor blade. A doctor blade having a gap of 250 - 500µm is used.

When using the casting method using a doctor blade for forming the membrane, separating and removing the support material from the electrolyte membrane is performed between setting and impregnating acids. To remove the support material, soaking is carried out in distilled water at temperatures of 60 to 80°C.

For the support material, any material which can support the electrolyte membrane can be used. Examples of the support material include a glass substrate, a polyimide film, and the like. When using tape casting method, the tape-cast membrane is separated from the support material such as polyethylenetherephthalate and put into an oven for setting, and thus removing a support material is not required.

Also, when using a tape casting method using a mixture of a benzoxazine monomer and a polybenzimidazole to form the membrane, filtering the mixture is added.

After heating and setting the formed membrane, the membrane is impregnated in a proton conductor such as an acid to form the electrolyte membrane.

Examples of the proton conductor include phosphoric acid, C₁-C₁₀ alkyl phosphoric acid, and the like. Examples of the C₁-C₁₀ alkyl phosphoric acid include ethyl phosphoric acid or the like.

The content of the proton conductor is 300 to 1000 parts by weight based on 100 parts by weight of the electrolyte membrane. The concentration of acids used in an embodiment of the present invention is not limited to a particular concentration, but when using phosphoric acid, 85 weight% of phosphoric acid solution is used.
The impregnation time of phosphoric acid is 2.5 to 14 hours at 80°C.

The electrolyte membrane can be used as a hydrogen ion conducting membrane of fuel cells. A process of manufacturing an electrode-membrane assembly for fuel cells is as below.
The term "membrane and electrode assembly (MEA)" as used in the present invention indicates a stacked structure in which electrodes including a catalyst layer and a diffusion layer are disposed on both sides of an electrolyte membrane.

The MEA in an embodiment of the present invention is formed by positioning the electrodes including the electrode catalyst layer on both sides of the electrolyte membrane that had been obtained from the above process, and bonding them at high temperature and pressure, and then by bonding a fuel diffusion layer thereto.

Temperature is heated up to the temperature for the electrolyte membrane softening, and pressure of 0.1 to 3 ton/cm², and approximately 1 ton/cm² of pressure is applied.

Then, a bipolar plate is installed in the fuel diffusion layer of the electrode-membrane assembly to complete the fuel cell. The bipolar plate has a slot for fuel supply, and functions as a current collector. The usage of fuel cell according to an embodiment of the present invention is not limited to a particular usage, but may preferably be used as a polymer electrolyte membrane fuel cell.

The definitions of the substituents used in Formulae of embodiments of the present invention are listed below.

Specific examples of the unsubstituted C₁-C₂₀ alkyl group in Formulae of embodiments of the present invention include methyl, ethyl, propyl, isobutyl, sec-butyl, pentyl, iso-amil, hexyl, and the like, and at least one hydrogen atom of the alkyl group can be substituted with a halogen atom, a C₁-C₂₀ alkyl group that is substituted with a halogen atom (Examples include CCF₃, CHCF₂, CH₂F, CCl₃, and the like), a hydroxy group, a nitro group, a cyano group, an amino group, a amidino group, a hydrazine, a hydrazone, a carboxyl group or a salt thereof, a sulfonic group or a salt thereof, phosphoric acid and a salt thereof, or C₁-C₂₀ alkyl group, C₂-C₂₀ alkenyl group, C₂-C₂₀ alkynyl group, C₁-C₂₀ heteroalkyl group, C₆-C₂₀ aryl group, C₆-C₂₀ arylalkyl group, C₆-C₂₀ heteroaryl group, or C₆-C₂₀ heteroarylalkyl group.

Specific examples of the unsubstituted C₁-C₂₀ alkenyl group in Formulae of embodiments of the present invention include vinylene, alylene, and the like, and at least one hydrogen atom of the alkenyl group also can be substituted with the same substituents as in the alkyl group.

Specific examples of the unsubstituted C₂-C₂₀ alkynyl group in Formulae of embodiments of the present invention include acetylene and the like, and at least one hydrogen atom of the alkynyl group can be substituted with the same substitutents as in the alkyl group.

Specific examples of the unsubstituted C₂-C₂₀ alkylene group include methylene, ethylene, propylene, isobutylene, sec-butylene, pentylene, iso-amilene, hexylene, and the like, and at least one hydrogen atom of the alkylene group can be substituted with the same substitutents as in the alkyl group.

Specific examples of the unsubstituted C₂-C₂₀ alkenylene group include an aryl group and the like, and at least one hydrogen atom of the alkenylene group can be substituted with the same substitutents as in the alkyl group. Specific examples of the unsubstituted C₂-C₂₀ alkynylene group include an acetylene group and the like, and at least one hydrogen atom of the alkynylene group can be substituted with the same substitutents as in the alkyl group.
The aryl group used in embodiments of the present invention is used independently or combined, and indicates a C6-C20 carbocycle aromatic system having at least one ring which are attached together in a pendant manner or are fused. The term "aryl" includes an aromatic radical such as a phenyl, a naphthyl, and tetrahydronaphthyl. The aryl group can have substituents such as haloalkylene, nitro, cyano, alkoxy and low alkylamino. Also, at least one hydrogen atom of the aryl group can be substituted with the same substituents as in the alkyl group.

The arylene group used in embodiments of the present invention is used independently or combined, and indicates a C₆-C₂₀ carbocycle aromatic system having at least one ring, and the rings which are attached together in a pendant manner or are fused. The term arylene includes an aromatic radical such as phenylene, naphthylene, and tetrahydronaphthylene. The arylene group can have substituents such as haloalkylene, nitro, cyano, alkoxy and low alkylamino. Also, at least one hydrogen atom of the aryl group can be substituted with the same substituents as in the alkyl group.

The arylalkyl group used in embodiments of the present invention indicates an aryl group in which some hydrogen atoms are substituted with a low alkyl such as a radical including methyl, ethyl, propyl, or the like. Examples include benzyl, phenylethyl, or the like. At least one hydrogen atom of the arylalkyl group can be substituted with the same substituents as in the alkyl group.

The heteroaryl group used in embodiments of the present invention indicates a C₁-C₂₀ 1+ monocyclic or bicyclic aromatic 2+ organic compound that includes one to three hetero atoms selected from N, O, P and S, and the other ring atoms are carbon atoms. At least one hydrogen atom of the heteroaryl group can be substituted with the same substituents as in the akyl group.

The heteroarylene group used in embodiments of the present invention indicates a C₁-C₂₀ 1+ monocyclic or bicyclic aromatic 2+ organic compound that includes one to three hetero atoms selected from N, O, P and S, and the other ring atoms are carbon atoms. At least one hydrogen atom of the heteroarylene group can be substituted with the same substituents as in the akyl group.

The heteroarylalkyl group used in embodiments of the present invention indicates a heteroaryl group in which some hydrogen atoms are substituted with an alkyl group. At least one hydrogen atom of the heteroarylalkyl group can be substituted with the same substituents as in the alkyl group. The carbocyclic group used in embodiments of the present invention indicates a C₅-C₁₀ ring group such as a cyclohexyl group, and at least one hydrogen atom of the carbocyclic group can be substituted with the same substituents as in the alkyl group.

The carbocyclic alkyl group used in embodiments of the present invention indicates a carbocyclic group in which some hydrogen of the alkyl group is substituted with an alkyl group. At least one hydrogen atom of the alkyl group can be substituted with the same substituents as in the alkyl group.

The heterocyclic group used in embodiments of the present invention indicates a ring group having 5 to 10 atoms including hetero atoms such as nitrogen, ulfur, phosphorus, oxygen, or the like, and at least one hydrogen atom of the heterocyclic group can be substituted with the same substituents as in the alkyl group.
The heterocyclic alkyl group used in embodiments of the present invention indicates a heterocarbocyclic group in which some hydrogen of the heterocyclic alkyl group is substituted with an alkyl group. At least one hydrogen atom of the heterocyclic alkyl group can be substituted with the same substituents as in the alkyl group.

Hereinafter, the present invention will be described with reference to the following examples. The following examples are for illustrative purposes only and are not intended to limit the scope of the invention.

### Examples

### Example 1: Manufacturing an electrode for fuel cells and a fuel cell employing the electrode

2g of PtCo/C and 9g of NMP were added to a stirring container and stirred for 2 minutes using a high-speed stirring machine. To this mixture, a solution in which 0.4g of t-BUPH-a represented by Formula 4 was dissolved in 3.6g of NMP was added and stirred for an additional 2 minutes.

Next, a solution in which 0.1g of polyvinylidenefluoride was dissolved in 3.9g of NMP was added to the above mixture and stirred for an additional 2 minutes to make a slurry for forming electrode catalyst layers.

Carbon paper was cut to the size of 4×7 cm², fixed on a glass substrate, and coated using a doctor blade (Sheen instrument) with a gap controlled to 850µm.

The slurry for forming cathode catalyst layer was coated on the carbon paper and dried for one hour at room temperature to provide a cathode (cathode).

The loading of platinum cobalt of the completed cathode is 3.0 mg/cm². An anode (anode) used in embodiments of the present invention was obtained by the process described below.

2 g Pt/C(TEC10V50E) and 9g of NMP were added to a stirring container and stirred for 2 minutes using a high-speed stirring machine. Next, a solution in which 0.1g of polyvinylidenefluoride was dissolved in 3.9g of NMP was added to the above mixture and stirred for an additional 2 minutes to make a slurry for forming anode catalyst layers. The slurry for forming anode catalyst layers was coated on a carbon paper coated with a microporous layer using a bar coater machine. The loading of Pt of the completed anode is 1.4 mg/cm².

Separately, 65 parts by weight of benzoxazine monomer represented by Formula 3 and 35 parts by weight of a polybenzimidazole were blended and set at temperatures in the range of 50 to 250°C, preferably of 80 to 220°C. Then, 85 weight% of phosphoric acid were impregnated therein to form an electrolyte membrane. The content of phosphoric acid was approximately 500 parts by weight based on 100 parts by total weight of the electrolyte membrane.

A membrane and electrode assembly (MEA) was manufactured by mediating the electrolyte membrane between the cathode and the anode, wherein the cathode and the anode were used without being impregnated with phosphoric acid.

A 200µm-thick Teflon sheet for a main gasket and a 20µm-thick Teflon sheet for a sub-gasket were used superposed on the interfacial surface of the electrode and the electrolyte membrane to block gas permeation between the cathode and the anode. The MEA was manufactured by controlling and increasing the pressure applied on the MEA from 1, through 2, and to 3 N-m Torque using a torque wrench.

The performance of the (fuel) cell were measured after generating electricity by circulating hydrogen to the anode with a flow rate of 100 ccm (cubic cm per minute), and air to cathode with a flow rate of 250 ccm (cubic cm per minute) at 150 °C under the condition that the electrolyte membrane was not hydrated. Since an electrolyte doped with phosphoric acid is used, the fuel cell performance improves with time; therefore the final measurement is determined after aging until the operating voltage reaches a maximum. The area of the cathode and the anode is fixed to 2.8×2.8=7.84 cm². The thickness of the cathode and the anode can be varied due to the dispersion of the carbon paper, but the thickness of the cathode was approximately 430µm and the thickness of the anode was approximately 390µm.

### Example 2 : Manufacturing an electrode for fuel cells and a fuel cell employing the electrode

An electrode for fuel cells and a fuel cell employing the electrode were manufactured in the same manner as in Example 1 except that 0.6g of t-Buph-a represented by Formula 4 was used instead of 0.4g of t-Buph-a. The platinum cobalt loading of the completed cathode was 2.5 mg/cm².

### Example 3 : Manufacturing an electrode for fuel cells and a fuel cell employing the electrode

An electrode for fuel cells and a fuel cell employing the electrode were manufactured in the same manner as in Example 1 except that 0.2g of t-Buph-a represented by Formula 4 was used instead of 0.4g of t-Buph-a. The platinum cobalt loading amount of the completed cathode was 2.0 mg/cm².

### Comparative Example 1 : Manufacturing an electrode for fuel cells and a fuel cell employing the electrode

An electrode for fuel cells and a fuel cell employing the electrode were manufactured in the same manner as in Example 1 except that t-Buph-a represented by Formula 4 was not added. The platinum cobalt loading amount of the completed cathode was 3.0 mg/cm² and the platinum loading amount of the completed anode was 1.4 mg/cm².

### Comparative Example 2 : Manufacturing an electrode for fuel cells and a fuel cell employing the electrode

An electrode for fuel cells and a fuel cell employing the electrode were manufactured in the same manner as in Example 1 except that 0.1g of SB represented by Formula below was used instead of the t-Buph-a represented by Formula 4:

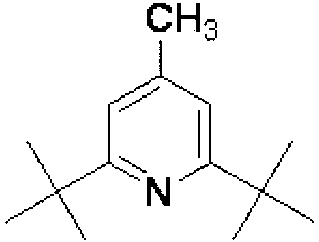

### Comparative Example 3 : Manufacturing an electrode for fuel cells and a fuel cell employing the electrode

An electrode for fuel cells and a fuel cell employing the electrode were manufactured in the same manner as in Example 1 except that 0.4 g of tris(4-hydroxyphenyl)phosphate [#5(OH)] represented by Formula below was used instead of the t-Buph-a represented by Formula 4:

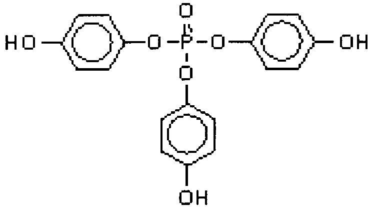

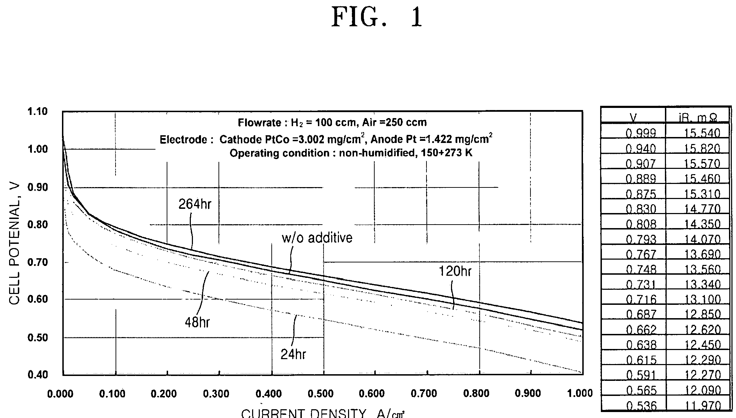

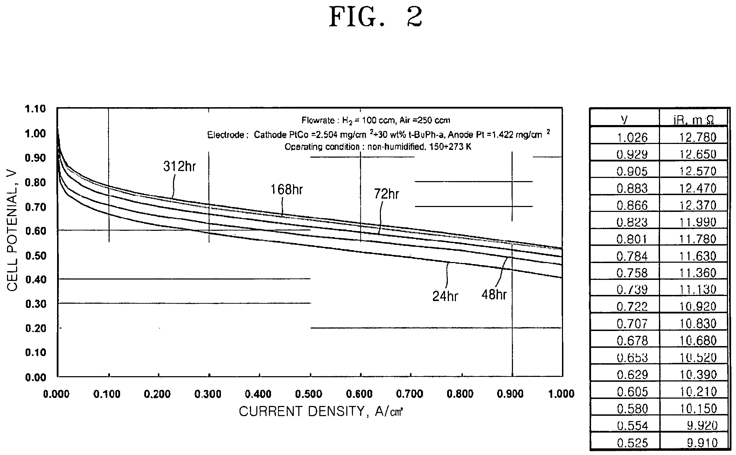

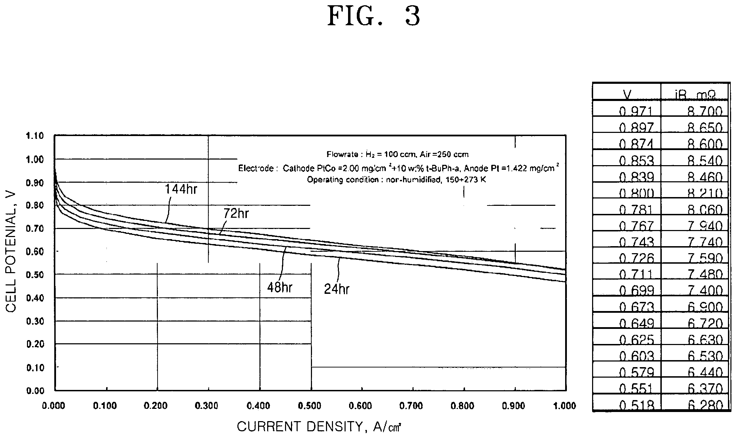

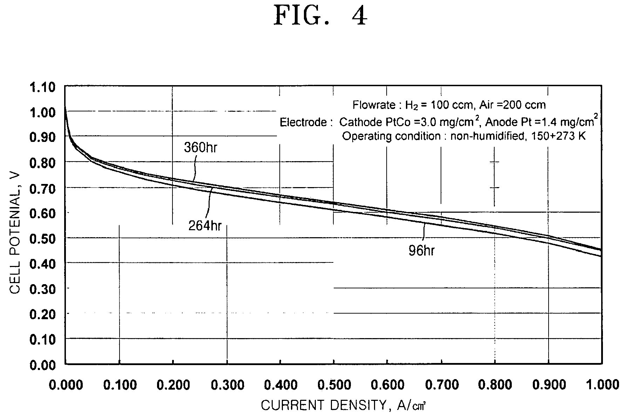

The changes in cell potential according to current density were measured in the fuel cells of Examples 1 to 3 and Comparative Example 1, and the results are shown in FIGS. 1 through 4.

Referring to FIGS. 1 through 4, it is ascertained that MEA performance is improved when using the electrode manufactured by adding t-Buph-a of Formula 4 except when 0.2 g of t-Buph-a was added. When 0.4g of t-Buph-a was added, the improvement in performance peaked, that is, resulted in a voltage of 0.716 V at 0.3 A/cm². Therefore, it is shown that the additive, that is, t-Buph-a evenly disperses phosphoric acid to electrodes with micropores, and increases three-phase interfacial area, thereby improving the performance of MEA.

### Measurement 1: Measurement of cell resistance

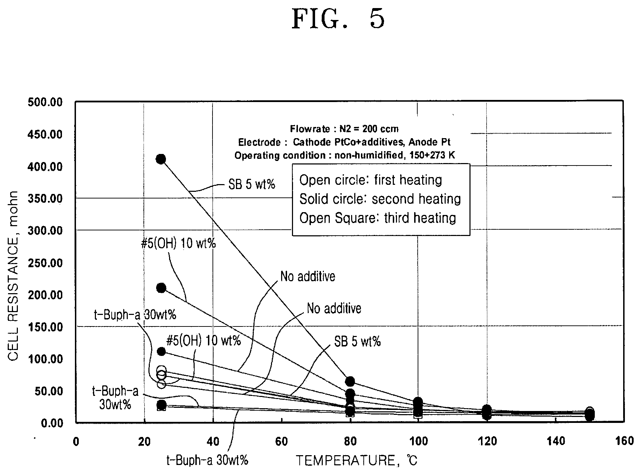

After the cell performance of the MEA obtained from Example 2 and Comparative Examples 1 - 3 was maximized, cell resistance was measured with respect to temperature at 1 kHz during repeated cooling-heating of the cell, and the result is shown in FIG. 5. In FIG. 5, t-Buph-a 30wt% is of Example 2, SB 5wt% is of Comparative Example 2, and #5(OH) is of Comparative Example 3.

Referring to FIG. 5, MEAs were formed using electrodes manufactured in the same manner as in Example 1 except that additives were added according to the composition of each example, and cell resistance at 1 kHz was measured with AC ohmmeter at each temperature during repeated cooling-heating of the cell after the cell performance was maximized. It is observed that the cell resistance of the MEA employing the electrode to which t-Buph-a is added shows little increase in cell resistance even at cooling-heating cycle (little hysteresis). A large increase in cell resistance when cooling is related to the increases in not only the electrolyte membrane resistance but also the interfacial resistance. Thus, it is shown that the t-BuPh-a additive, unlike other additives, maintains well the dispersion state of phosphoric acid within electrodes, and thus keeps the interfacial resistance low.

### Measurement 2: Measurement of cell resistance

To analyze the cause of improvement in performance of the fuel cell according to embodiment of the present invention, the slope and the y intercept of a voltage versus log i graph were obtained by carrying out Tafel fitting. The y intercept value, which is related to exchange current density, increases when additives are added. The slope, which is related to the reaction mechanism, shows a distinctively different value from a PBI standard electrode and a PTFE electrode, thus changes in a reaction mechanism are presumed.

STD PBI of Table 1 is a fuel cell which was manufactured in the same manner as in Example 1 except that polybenzimidazole was added as a binder instead of polyvinylidenefluoride. STD PTFE(623) of Table 1 is a fuel cell which was manufactured in the same manner as in Example 1 except that polytetrafloroethylene was added as a binder instead of polyvinylidenefluoride. mBOA(17wt%) is a fuel cell which was manufactured in the same manner as in Example 1 except that 0.17 weight% of t-BUPH-a was added based on 1 weight% of catalyst. mBOA(22wt%)No. 4 is a fuel cell which was manufactured in the same manner as in Example 1 except that 0.22 weight% of t-Buph-a was added based on 1 weight% of catalyst. mBOA (N.A.) is a fuel cell which was manufactured in the same manner as in Example 1 except that an electrolyte membrane, which was obtained by dissolving t-Buph-a in phosphoric acid and impregnating the mixture solution in benzoxazine monomer/polybenzimidazole copolymer, was used instead of directly adding t-Buph-a to electrodes.

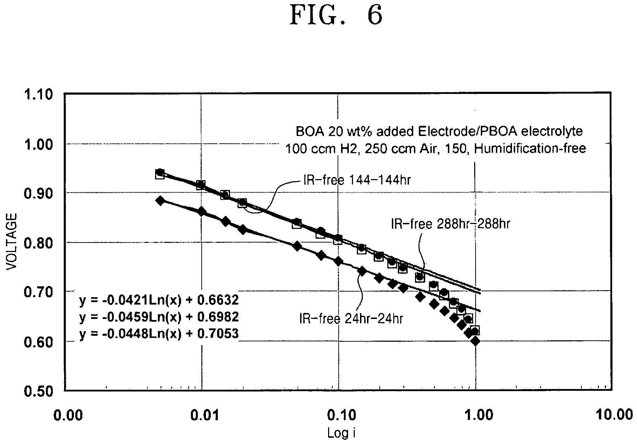

The results of Tafel fitting measurements are shown in FIG. 6 and Table 1 below.

**Table 1**

| | | | E = a + b*In(i) | | b'*log(i) |
|---|---|---|---|---|---|
| | **COMPOSITION** | **ADDITIVE OR BINDER** | a | b | b' |
| | | | | | mV/decade |
| STD PBI | | PBI | 0.576 | -0.038 | -86.5 |
| STD PTFE(623) | | PTFE | 0.656 | -0.051 | -116.6 |
| mBOA | 17 wt% | PBOA | 0.699 | -0.046 | -104.9 |
| m BOA | 22 wt% | m BOA | 0.673 | -0.044 | -101.2 |
| m BOA | N.A. | m BOA | 0.705 | -0.045 | -103.0 |

Referring to FIG. 6 and Table 1, when t-BUPH-a is added, a value related to three-phase interfacial area increases. Therefore, it is ascertained that using the additive, that is, t-Buph-a, evenly disperses phosphoric acid within the electrodes and thus increases three-phase interfacial area. The slope b, which is related to the reaction mechanism, has a value between the values of the sole phosphoric acid type electrode and the electrode using PBI as a binder when the additive, that is, t-Buph-a, was added. It is known that when using PBI as a binder, the small molecular PBI dissolves in phosphoric acid and is adsorbed on the surface of Pt, thereby reducing the absolute value of the slope, and that a sole phosphoric acid type electrode has a slope value of around 120. Therefore, it could be seen that adding t-Buph-a results in a change in reaction mechanism.

The electrode for fuel cells according to embodiments of the present invention contains an even distribution of benzoxazine monomer which is a hydrophilic (or phosphoric acidophilic) material and dissolves in phosphoric acid but does not poison catalysts, thereby improving wetting capability of phosphoric acid (H₃PO₄) within electrodes and thus allowing phosphoric acid to permeate first into micropores in electrodes. As a result, flooding, that is, liquid phosphoric acid existing in a large amount within the electrodes, inhibits gas diffusion, which occurs when phosphoric acid permeates into macropores in electrodes, is efficiently prevented, thereby increasing three-phase interfacial area of gas (fuel gas or oxidized gas)-liquid (phosphoric acid)-solid (catalyst).

Therefore, the fuel cell employing the electrode according to embodiments of the present invention can operate under the condition of high-temperature and non-humidification and demonstrate improved cell performance.

## Claims

1. An electrode for fuel cells comprising a catalyst layer containing a benzoxazine monomer represented by Formula 1, a catalyst, and a binder: 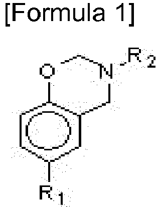
where R₁ is a hydrogen atom, a substituted or unsubstituted C₁-C₂₀ alkyl group, a substituted or unsubstituted C₂-C₂₀ alkenyl group, a substituted or unsubstituted C₂-C₂₀ alkynyl group, a substituted or unsubstituted C₆-C₂₀ aryl group, a substituted or unsubstituted C₂-C₂₀ heteroaryl group, a substituted or unsubstituted C₄-C₂₀ cycloalkyl group, a substituted or unsubstituted C₂-C₂₀ a heterocyclic group, a halogen atom, a hydroxy group, or a cyano group; and
R₂ is a substituted or unsubstituted C₆-C₂₀ aryl group, a substituted or unsubstituted C₆-C₂₀ aryl group, a substituted or unsubstituted C₇-C₂₀ arylalkyl group, a substituted or unsubstituted C₂-C₂₀ heteroaryl group, a substituted or unsubstituted C₂-C₂₀ heteroarylalkyl group, a substituted or unsubstituted C₂-C₂₀ heterocyclic group, a substituted or unsubstituted C₂-C₂₀ heterocyclic alkyl group or a group represented by the following formula: 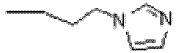
wherein in a substituted group at least one hydrogen atom is substituted with a halogen atom, a C₁-C₂₀ alkyl group that is substituted with a halogen atom, a hydroxy group, a nitro group, a cyano group, an amino group, a amidino group, a hydrazine, a hydrazone, a carboxyl group or a salt thereof, a sulfonic group or a salt thereof, phosphoric acid and a salt thereof, or C₁-C₂₀ alkyl group, C₂-C₂₀ alkenyl group, C₂-C₂₀ alkynyl group, C₁-C₂₀ heteroalkyl group, C₆-C₂₀ aryl group, C₆-C₂₀ arylalkyl group, C₆-C₂₀ heteroaryl group, or a C₆-C₂₀ heteroarylalkyl group.

2. The electrode of claim 1, wherein R₁ is a C1-C10 alkyl group, an allyl group, a C6-C20 aryl group, a tertbutyl group, a C2-C10 alkenyl group, or a C2-C10 alkynyl group, and R₂ is a group represented by the following formula:

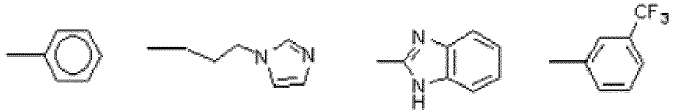

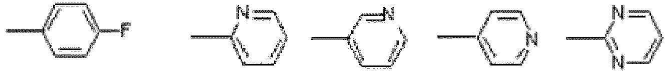

3. The electrode of claim 1, wherein the benzoxazine monomer represented by Formula 1 is represented by one selected from Formulae 2 through 11:

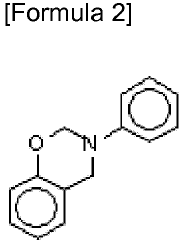

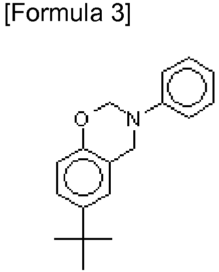

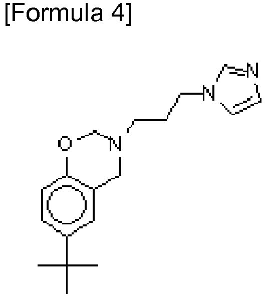

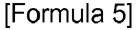

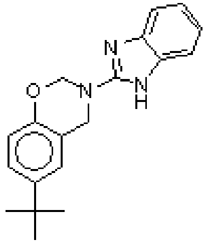

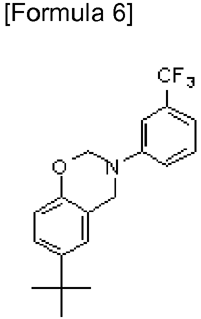

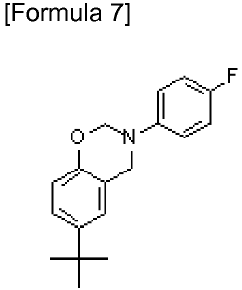

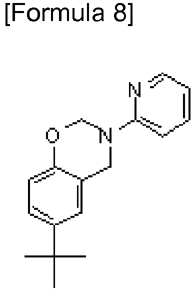

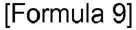

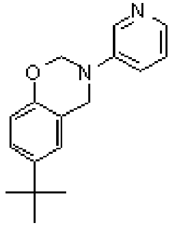

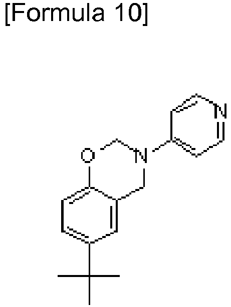

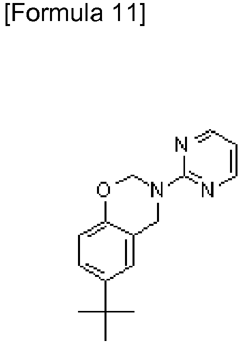

4. The electrode of claim 1, wherein the content of the benzoxazine monomer is 0.001 to 0.5 parts by weight based on 1 part by weight of the catalyst.

5. The electrode of claim 1, wherein the catalyst is a platinum or an alloy or a mixture of platinum with at least one metal selected from the group consisting of gold, palladium, rhodium, iridium, ruthenium, tin, molybdenum, cobalt, and chromium.

6. The electrode of claim 1, wherein the binder is at least one selected from the group consisting of poly(vinylidenefluoride), polytetrafluoroethylene, tetrafluoroethylene-hexafluoroethylene copolymer and perfluoroethylene.

7. The electrode of claim 1, wherein the binder is 0.001 to 0.5 parts based on 1 part by weight of the catalyst.

8. A method of manufacturing an electrode for fuel cells, comprising:
obtaining a dispersed solution by dispersing a catalyst in a solvent;
adding, mixing and stirring of a mixture containing a benzoxazine monomer represented by Formula 1, a binder, and a solvent with the dispersed solution; and
coating the mixture on the surface of a carbon support. 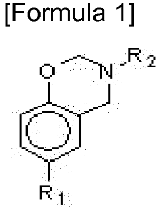
where R₁ is a hydrogen atom, a substituted or unsubstituted C₁-C₂₀ alkyl group, a substituted or unsubstituted C₂-C₂₀ alkenyl group, a substituted or unsubstituted C₂-C₂₀ alkynyl group, a substituted or unsubstituted C₆-C₂₀ aryl group, a substituted or unsubstituted C₂-C₂₀ heteroaryl group, a substituted or unsubstituted C₄-C₂₀ cycloalkyl group, a substituted or unsubstituted C₂-C₂₀ heterocyclic group, a halogen atom, a hydroxy group, or a cyano group; and
R₂ is group, a substituted or unsubstituted C₆-C₂₀ aryl group, a substituted or unsubstituted C₆-C₂₀ aryl group, a substituted or unsubstituted C₇-C₂₀ arylalkyl group, a substituted or unsubstituted C₂-C₂₀ heteroaryl group, a substituted or unsubstituted C₂-C₂₀ heteroarylalkyl group, a substituted or unsubstituted C₂-C₂₀ a heterocyclic group, or a substituted or unsubstituted C₂-C₂₀ heterocyclic alkyl group or a group represented by the following formula:

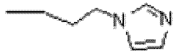

9. A fuel cell comprising the electrode of any one claim among claims 1 to 7.

## Patentansprüche

1. Elektrode für Brennstoffzellen, die eine Katalysatorschicht umfasst, die ein durch Formel 1 dargestelltes Benzoxazin-Monomer, einen Katalysator, und einen Binder enthält: 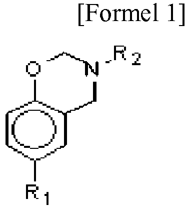
wobei R₁ ein Wasserstoffatom, eine substituierte oder nicht substituierte C₁-C₂₀-Alkylgruppe, eine substituierte oder nicht substituierte C₂-C₂₀-Alkenylgruppe, eine substituierte oder nicht substituierte C₂-C₂₀-Alkynylgruppe, eine substituierte oder nicht substituierte C₆-C₂₀-Arylgruppe, eine substituierte oder nicht substituierte C₂-C₂₀-Heteroarylgruppe, eine substituierte oder nicht substituierte C₄-C₂₀-Cycloalkylgruppe, eine substituierte oder nicht substituierte C₂-C₂₀ heterocyclische Gruppe, ein Halogenatom, eine Hydroxygruppe oder eine Cyanogruppe ist; und
R₂ eine substituierte oder nicht substituierte C₆-C₂₀-Arylgruppe, eine substituierte oder nicht substituierte C₆-C₂₀-Arylgruppe, eine substituierte oder nicht substituierte C₇-C₂₀-Arylalkylgruppe, eine substituierte oder nicht substituierte C₂-C₂₀-Heteroarylgruppe, eine substituierte oder nicht substituierte C₂-C₂₀-Heteroarylalkylgruppe, eine substituierte oder nicht substituierte C₂-C₂₀ heterocyclische Gruppe, eine substituierte oder nicht substituierte C₂-C₂₀ heterocyclische Alkylgruppe oder eine durch die folgende Formel dargestellte Gruppe ist: 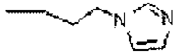
wobei in einer substituierten Gruppe zumindest ein Wasserstoffatom mit einem Halogenatom, einer C₁-C₂₀-Alkylgruppe, die mit einem Halogenatom, einer Hydroxygruppe, einer Nitrogruppe, einer Cyanogruppe, einer Aminogruppe, einer Amidinogruppe, einem Hydrazin, einem Hydrazon, einer Carboxylgruppe oder einem Salz davon, einer Sulfongruppe oder einem Salz davon, Phosphorsäure oder einem Salz davon substituiert ist, oder einer C₁-C₂₀-Alkylgruppe, einer C₂-C₂₀-Alkenylgruppe, einer C₂-C₂₀-Alkynylgruppe, einer C₁-C₂₀-Heteroalkylgruppe, einer C₆-C₂₀-Arylgruppe, einer C₆-C₂₀-Arylalkylgruppe, einer C₆-C₂₀-Heteroarylgruppe oder einer C₆-C₂₀-Heteroarylalkylgruppe substituiert ist.

2. Elektrode nach Anspruch 1, wobei R₁ eine C₁-C₁₀-Alkylgruppe, eine Allylgruppe, eine C₆-C₂₀-Arylgruppe, eine tert-Butylgruppe, eine C₂-C₁₀-Alkenylgruppe oder eine C₂-C₁₀-Alkynylgruppe ist und R₂ eine durch die folgende Formel dargestellte Gruppe ist:

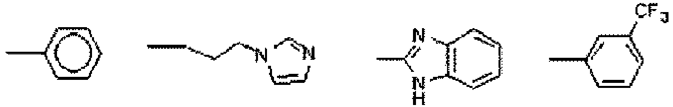

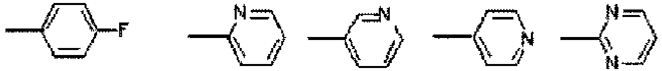

3. Elektrode nach Anspruch 1, wobei das durch Formel 1 dargestellte Benzoxazin-Monomer durch ein aus den Formeln 2 bis 11 ausgewähltes dargestellt wird:

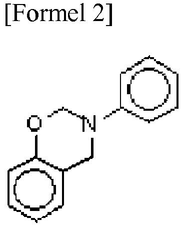

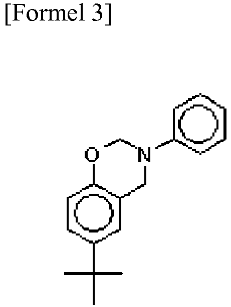

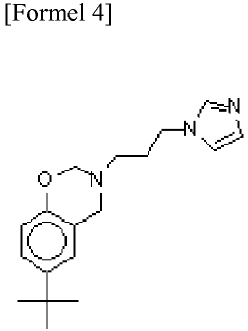

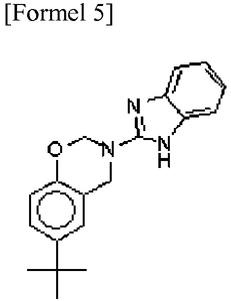

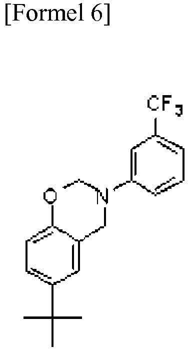

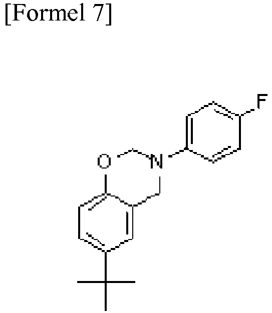

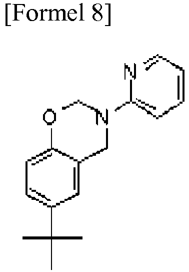

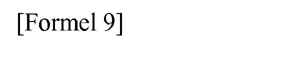

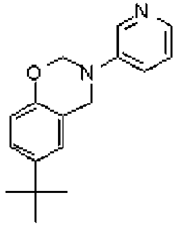

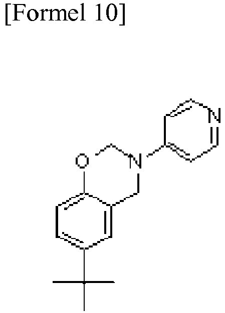

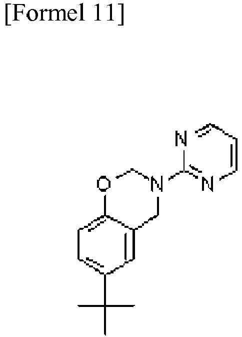

4. Elektrode nach Anspruch 1, wobei der Gehalt des Benzoxazin-Monomers 0,001 bis 0,5 Gewichtsanteile, basierend auf 1 Gewichtsanteil des Katalysators, beträgt.

5. Elektrode nach Anspruch 1, wobei der Katalysator ein Platin oder eine Platinlegierung oder ein Platingemisch mit zumindest einem Metall, ausgewählt aus der Gruppe bestehend aus Gold, Palladium, Rhodium, Iridium, Ruthenium, Zinn, Molybdän, Kobalt und Chrom, ist.

6. Elektrode nach Anspruch 1, wobei der Binder zumindest eine Verbindung, ausgewählt aus der Gruppe bestehend aus Poly(vinylidenfluorid), Polytetrafluorethylen, Tetrafluorethylen-Hexafluorethylen-Copolymer und Perfluorethylen, ist.

7. Elektrode nach Anspruch 1, wobei der Binder 0,001 bis 0,5 Anteile, basierend auf 1 Gewichtsanteil des Katalysators, beträgt.

8. Verfahren zur Herstellung einer Elektrode für Brennstoffzellen, das
Folgendes umfasst: Erhalten einer dispergierten Lösung durch Dispergieren eines
Katalysators in einem Lösungsmittel;
Hinzugeben, Vermischen und Rühren eines Gemisches, das ein durch Formel 1 dargestelltes Benzoxazin-Monomer, einen Binder und ein Lösungsmittel mit der dispergierten Lösung enthält; und
Beschichten einer Oberfläche eines Kohlenstoffträgers mit dem Gemisch. 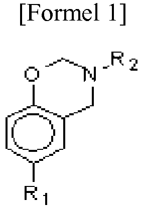
wobei R₁ ein Wasserstoffatom, eine substituierte oder nicht substituierte C₁-C₂₀-Alkylgruppe, eine substituierte oder nicht substituierte C₂-C₂₀-Alkenylgruppe, eine substituierte oder nicht substituierte C₂-C₂₀-Alkynylgruppe, eine substituierte oder nicht substituierte C₆-C₂₀-Arylgruppe, eine substituierte oder nicht substituierte C₂-C₂₀-Heteroarylgruppe, eine substituierte oder nicht substituierte C₄-C₂₀-Cycloalkylgruppe, eine substituierte oder nicht substituierte C₂-C₂₀ heterocyclische Gruppe, ein Halogenatom, eine Hydroxygruppe oder eine Cyanogruppe ist; und
R₂ eine Gruppe, eine substituierte oder nicht substituierte C₆-C₂₀-Arylgruppe, eine substituierte oder nicht substituierte C₆-C₂₀-Arylgruppe, eine substituierte oder nicht substituierte C₇-C₂₀-Arylalkylgruppe, eine substituierte oder nicht substituierte C₂-C₂₀-Heteroarylgruppe, eine substituierte oder nicht substituierte C₂-C₂₀-Heteroarylalkylgruppe, eine substituierte oder nicht substituierte C₂-C₂₀ heterocyclische Gruppe, eine substituierte oder nicht substituierte C₂-C₂₀ heterocyclische Alkylgruppe oder eine durch die folgende Formel dargestellte Gruppe ist:

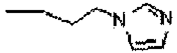

9. Brennstoffzelle, die die Elektrode nach einem der Ansprüche 1 bis 7 umfasst.

## Revendications

1. Electrode pour piles à combustible comprenant une couche de catalyseur contenant un monomère de benzoxazine représenté par la formule 1, un catalyseur et un liant : 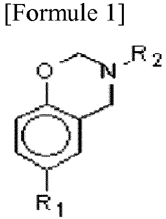
où R₁ représente un atome d'hydrogène, un groupe alkyle en C₁ à C₂₀ substitué ou non substitué, un groupe alcényle en C₂ à C₂₀ substitué ou non substitué, un groupe alcynyle en C₂ à C₂₀ substitué ou non substitué, un groupe aryle en C₆ à C₂₀ substitué ou non substitué, un groupe hétéroaryle en C₂ à C₂₀ substitué ou non substitué, un groupe cycloalkyle en C₄ à C₂₀ substitué ou non substitué, un groupe hétérocyclique en C₂ à C₂₀ substitué ou non substitué, un atome d'halogène, un groupe hydroxy ou un groupe cyano ; et
R₂ représente un groupe aryle en C₆ à C₂₀ substitué ou non substitué, un groupe aryle en C₆ à C₂₀ substitué ou non substitué, un groupe arylalkyle en C₇ à C₂₀ substitué ou non substitué, un groupe hétéroaryle en C₂ à C₂₀ substitué ou non substitué, un groupe hétéroarylalkyle en C₂ à C₂₀ substitué ou non substitué, un groupe hétérocyclique en C₂ à C₂₀ substitué ou non substitué, un groupe alkyle hétérocyclique en C₂ à C₂₀ substitué ou non substitué ou un groupe représenté par la formule suivante : 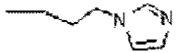
dans laquelle dans un groupe substitué au moins un atome d'hydrogène est substitué par un atome d'halogène, un groupe alkyle en C₁ à C₂₀ qui est substitué par un atome d'halogène, un groupe hydroxy, un groupe nitro, un groupe cyano, un groupe amino, un groupe amidino, un groupe hydrazine, un groupe hydrazone, un groupe carboxy ou un sel de celui-ci, un groupe sulfonique ou un sel de celui-ci, un groupe acide phosphorique ou un sel de celui-ci, un groupe alkyle en C₁ à C₂₀, un groupe alcényle en C₂ à C₂₀, un groupe alcynyle en C₂ à C₂₀, un groupe hétéroalkyle en C₁ à C₂₀, un groupe aryle en C₆ à C₂₀, un groupe arylalkyle en C₆ à C₂₀, un groupe hétéroaryle en C₆ à C₂₀ ou un groupe hétéroarylalkyle en C₆ à C₂₀.

2. Electrode selon la revendication 1, ledit groupe R₁ étant un groupe alkyle en C₁ à C₁₀, un groupe allyle, un groupe aryle en C₆ à C₂₀, un groupe tertbutyle, un groupe alcényle en C₂ à C₁₀ ou un groupe alcynyle en C₂ à C₁₀, et ledit groupe R₂ étant un groupe représenté par la formule suivante :

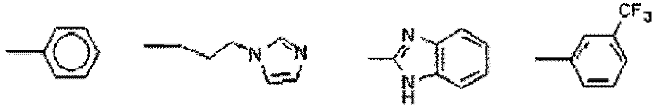

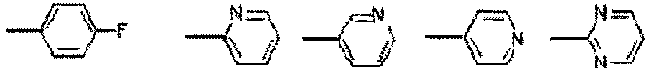

3. Electrode selon la revendication 1, ledit monomère de benzoxazine représenté par la formule 1 étant représenté par une formule choisie parmi les formules 2 à 11 :

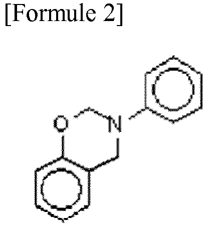

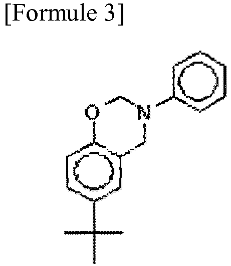

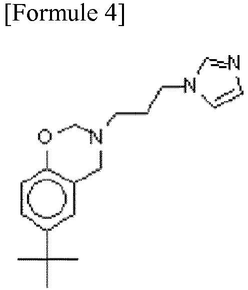

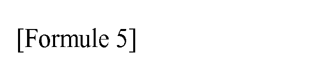

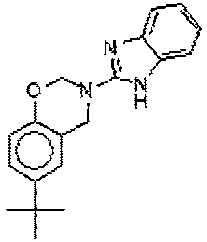

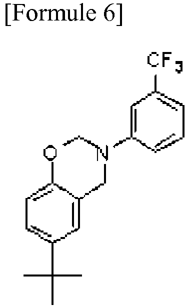

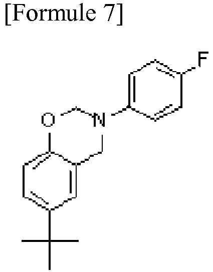

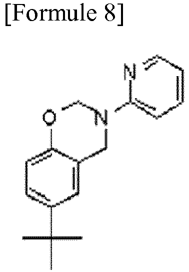

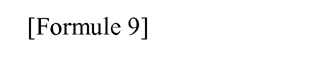

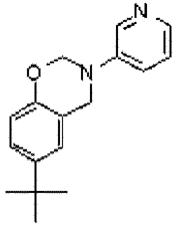

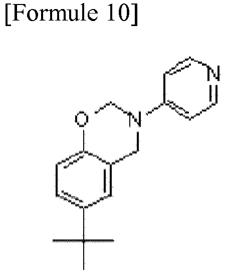

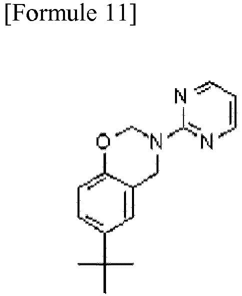

4. Electrode selon la revendication 1, la teneur du monomère de benzoxazine représentant 0,001 à 0,5 parties en poids sur la base d'une partie en poids du catalyseur.

5. Electrode selon la revendication 1, ledit catalyseur étant le platine ou un alliage ou un mélange de platine avec au moins un métal choisi dans le groupe constitué par l'or, le palladium, le rhodium, l'iridium, le ruthénium, l'étain, le molybdène, le cobalt et le chrome.

6. Electrode selon la revendication 1, ledit liant étant au moins un liant choisi dans le groupe constitué par le fluorure de polyvinylidène, le polytétrafluoroéthylène, le copolymère tétrafluoroéthylène-hexafluoroéthylène et le perfluoroéthylène.

7. Electrode selon la revendication 1, ledit liant représentant 0,001 à 0 ,5 parties sur la base de 1 partie en poids du catalyseur.

8. Procédé de fabrication d'une électrode pour piles à combustible, comprenant :
l'obtention d'une solution dispersée par dispersion d'un catalyseur dans un solvant ;
l'ajout, le mélange et l'agitation d'un mélange contenant un monomère de benzoxazine représenté par la formule 1, un liant et un solvant avec la solution dispersée ; et
l'application du mélange sur la surface d'un support en carbone. 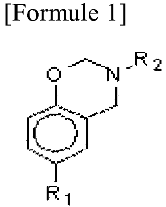
où R₁ représente un atome d'hydrogène, un groupe alkyle en C₁ à C₂₀ substitué ou non substitué, un groupe alcényle en C₂ à C₂₀ substitué ou non substitué, un groupe alcynyle en C₂ à C₂₀ substitué ou non substitué, un groupe aryle en C₆ à C₂₀ substitué ou non substitué, un groupe hétéroaryle en C₂ à C₂₀ substitué ou non substitué, un groupe cycloalkyle en C₄ à C₂₀ substitué ou non substitué, un groupe hétérocyclique en C₂ à C₂₀ substitué ou non substitué, un atome d'halogène, un groupe hydroxy ou un groupe cyano ; et
R₂ représente un groupe aryle en C₆ à C₂₀ substitué ou non substitué, un groupe aryle en C₆ à C₂₀ substitué ou non substitué, un groupe arylalkyle en C₇ à C₂₀ substitué ou non substitué, un groupe hétéroaryle en C₂ à C₂₀ substitué ou non substitué, un groupe hétéroarylalkyle en C₂ à C₂₀ substitué ou non substitué, un groupe hétérocyclique en C₂ à C₂₀ substitué ou non substitué, un groupe alkyle hétérocyclique en C₂ à C₂₀ substitué ou non substitué ou un groupe représenté par la formule suivante :

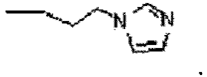

9. Pile à combustible comprenant l'électrode selon l'une quelconque des revendications 1 à 7.
